Europäisches Patentamt

European Patent Office

Office européen des brevets

(11) Publication number: **0 065 786**
**B1**

# EUROPEAN PATENT SPECIFICATION

(45) Date of publication of patent specification: **19.02.86**

(51) Int. Cl.⁴: **B 60 G 17/00, F 16 F 1/22**

(21) Application number: **82104593.7**

(22) Date of filing: **26.05.82**

(54) A method and an apparatus for controlling friction between leaf springs of a laminated leaf spring assembly.

(30) Priority: **27.05.81 JP 80597/81**
**27.05.81 JP 80598/81**
**10.08.81 JP 125125/81**
**28.01.82 JP 12341/82**

(43) Date of publication of application:
**01.12.82 Bulletin 82/48**

(45) Publication of the grant of the patent:
**19.02.86 Bulletin 86/08**

(84) Designated Contracting States:
**DE FR GB SE**

(56) References cited:
**DE-C- 587 483**
**FR-A-1 108 381**
**US-A-2 932 506**

(73) Proprietor: **NHK SPRING CO., Ltd.**
**1 Shinisogo-cho, Isogo-ku**
**Yokohama-shi (JP)**

(72) Inventor: **Shinbori, Takeyoshi**
**5-3-8, Take**
**Yokosuka-shi Kanagawa-ken (JP)**
Inventor: **Matsuoka, Susumu**
**3-5-206, 3-chome Tobio**
**Atsugi-shi Kanagawa-ken (JP)**
Inventor: **Kimura, Yoshio**
**2179-2, Miho-cho**
**Midori-ku Yokohama-shi (JP)**
Inventor: **Takadera, Ichiro**
**1-11-5, Tatekawa**
**Sumida-ku Tokyo (JP)**
Inventor: **Fukumura, Takeo**
**6-12-21, Sasage**
**Konan-ku Yokohama-shi (JP)**

(74) Representative: **Schmidt-Evers, Jürgen, Dipl.-Ing. et al**
**Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10**
**D-8000 München 22 (DE)**

## Description

The present invention relates to a method for controlling friction between a plurality of stacked leaf springs of a laminated leaf spring assembly for supporting the body of a vehicle, said leaf springs being connected to one another by clamping means at least indirectly to form pairs of contacting friction surfaces between which load-dependent normal forces are generated during spring action, said friction control being executed by the force of a pressure member which is connected to a free end of a piston of hydraulic cylinder means and which clamps said laminated leaf spring assembly in co-operation with a spring supporting member of said clamping means in the direction of thickness of said laminated leaf spring assembly, and said force of a pressure member being controlled by the pressure of a pressurized fluid supplied to a cylinder of said hydraulic cylinder means through a control valve. Furthermore the invention relates to a corresponding apparatus for controlling friction between a plurality of stacked leaf springs of a laminated leaf spring assembly for supporting the body of a vehicle, said leaf springs being connected to one another by clamping means at least indirectly to form pairs of contacting friction surfaces between which load-dependent normal forces are generated during spring action, said friction control being executed by clamping means including a spring supporting member and a pressure member which clamp said laminated leaf spring assembly between said control apparatus comprising hydraulic cylinder means for pressing said pressure member to urge said laminated leaf spring assembly against said spring supporting member, said hydraulic cylinder means including a cylinder and a piston which reciprocates in said cylinder and a free end of which is connected to said pressure member, and hydraulic controlling means having a control valve for controlling the pressure of a pressurized fluid supplied to a chamber defined within said cylinder of said hydraulic cylinder means.

A laminated leaf spring assembly including a number of leaf springs has been widely used for suspending a body to be supported, for example, the body of a vehicle. When the laminated leaf spring assembly is used for suspending the vehicle, the comfort, the driving stability and the like are influenced by the spring constant, the friction between the leaf springs of the assembly and the like. The degree of such influence depends on the vehicle speed, the condition of the road surface and the like. In general, when the vehicle runs on a smooth road, the smaller the friction acting on the opposing surfaces of each pair of adjacent leaf springs, that is, the friction between the leaf springs, the better becomes the comfort. On the other hand, a higher driving stability is attained when the friction between the leaf springs is large. The comfort is considered to be more important than the driving stability on the smooth road, since sufficient driving stability is ensured if a steering wheel is not suddenly turned.

A laminated leaf spring assembly including a number of tapered leaf springs has been proposed. The tapered leaf springs are decreased in thickness toward the ends. The weight of the laminated leaf spring assembly including such a construction is smaller than that including leaf springs of the constant thickness since the number of the former may be smaller than that of the latter. If the number of the leaf springs is smaller than that of the prior art laminated leaf spring assembly, the friction between the leaf spring is reduced. As a result, a shock absorber of a large capacity is required to improve the comfort on a rough road. However, such a shock absorber of a large capacity is expensive. In addition, the comfort is sometimes impaired, - since the shock absorber provides constant damping even if the damping is not needed. Therefore, a clamping means is used for clamping the leaf springs near the ends thereof in the direction of their thickness to increase the friction between the leaf springs. The conventional clamping means securely clamps the leaf springs by bolts. As a result, the friction between the leaf springs is maintained at a large value so that the comfort on the rough road is improved. However, the comfort on the smooth road is unsatisfactory. In this case, the bolts can be manually rotated to properly vary the clamping force. However, such manual control of the clamping force in accordance with the road condition is troublesome and therefore is not usually performed.

The laminated leaf spring assembly is also used for preventing the vibration of bodies to be supported other than the vehicle, for example, a reciprocating machine such as a compressor or a rotating machine such as an electric generator. In this case, the friction between the leaf springs is preferably increased only when a shock or resonance occurs. However, the friction between the leaf springs is also kept constant in the case of such a laminated leaf spring assembly for preventing the vibration. Therefore, required large friction cannot be provided, even if a shock or resonance occurs.

In a known method of the type described at the beginning and the apparatus realizing said method (FR—A—1,108,381), the variable pressure is determined either by a motor-driven pump or by the pressure in a shock absorber. Valves, which may be operated from the dashboard of a vehicle supported by the spring assembly, being provided to adjust the pressure for good or bad roads.

The invention is based on the object of optimizing the friction between the adjacent leaf springs of the laminated leaf spring assembly in accordance with the state of the body to be supported through control of the pressure of the pressurized fluid.

Starting out from the method of the type described at the beginning, the object is established in that values of predetermined factors of the vehicle, including the acceleration and speed of the vehicle, the load put on the vehicle, the height of the body changed by the load and the rotation angle of the steering wheel, are detected and signals corresponding to the detected values are supplied to the control valve to control the operation thereof.

Starting out from the known apparatus described at the beginning, the object is established in that said apparatus comprises detecting means for detecting values of predetermined factors of the vehicle, including the acceleration and speed of the vehicle, the load put on the vehicle, the height of the body changed by the load and the rotation angle of the steering wheel, and for supplying signals corresponding to the detected values to said control valve so as to control the operating pressure of said control valve.

It is, in fact, also known (US—A—2,932,506) to detect the value of the separation of a sensing unit on the body of a vehicle body from a magnet carried by a leaf spring on which the body is supported, and to produce a corresponding signal which causes a control valve to supply a correspondingly variable pressure to a hollow space within the leaf spring so as to vary the stiffness of the spring. This does, however, not lead to the idea of varying the friction between a plurality of stacked leaf springs of a laminated leaf spring assembly.

One way of carrying out the invention is described in detail below with reference to drawings which illustrate some specific embodiments, in which:

Fig. 1 is a front view of a laminated leaf spring assembly and a block diagram of an apparatus for controlling the friction between the leaf springs of the laminated leaf spring assembly according to a first embodiment of the present invention;

Fig. 2 is a longitudinal sectional view of a clamping means and a hydraulic cylinder means according to the first embodiment;

Figs. 3 and 4 are graphs for explaining a dynamic spring constant Kd and an equivalent damping coefficient Ea as a function of a vibration amplitude L, respectively;

Fig. 5 is a graph for explaining a vibration frequency as a function of a vibration transmissibility;

Fig. 6 is a partial front view of an apparatus for controlling the friction between the leaf springs of a laminated leaf spring assembly according to a second embodiment of the present invention;

Fig. 7 is a longitudinal sectional view of a clamping means and a hydraulic cylinder means of the control apparatus according to the second embodiment;

Figs. 8 and 9 are partial front views of laminated leaf spring assemblies according to the third and fourth embodiments of the present invention, respectively;

Figs. 10 and 11 are front views of laminated leaf spring assemblies according to the fifth and sixth embodiments of the present invention, respectively;

Fig. 12 is a partial front view of a laminated leaf spring assembly according to the seventh embodiment of the present invention;

Fig. 13 is a front view of a laminated leaf spring assembly and a block diagram according to the eighth embodiment of the present invention;

Fig. 14 is a graph for explaining an electric current as a function of a vibration transmissibility;

Fig. 15 is a front view of a laminated leaf spring assembly and a block diagram according to the ninth embodiment of the present invention; and

Fig. 16 is a longitudinal sectional view of a clamping means and a hydraulic cylinder means according to the ninth embodiment of the present invention.

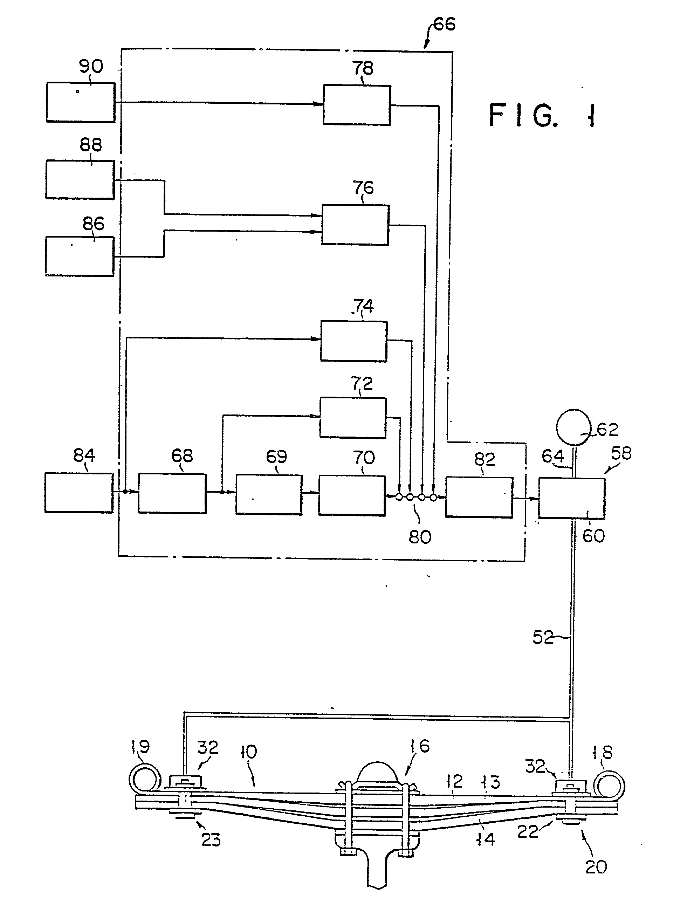

Referring to Fig. 1, a laminated leaf spring assembly 10 includes a plurality of, for example, 3 leaf springs 12, 13 and 14. In this embodiment, the leaf springs 12, 13 and 14 are formed as tapered leaf springs. However, they are not limited to tapered leaf springs and may be partially tapered leaf springs or leaf springs of a constant thickness. The leaf springs 12, 13 and 14 may be of different lengths and be laminated in a stepped form. The laminated leaf spring assembly 10 is clamped at the center by a U-bolt assembly 16 in the direction of its thickness as in the prior art. If the laminated leaf spring assembly 10 is used for suspending a vehicle body, it is connected to a rear axle (not shown) of the vehicle body through the U-bolt assembly 16, for example. Spring eyes 18 and 19 are integrally formed at the both ends of the main or uppermost leaf spring 12. These spring eyes 18 and 19 are movably attached to the vehicle body by a shackle assembly (not shown), for example.

An apparatus 20 for controlling the friction between the leaf springs of the laminated leaf spring assembly 10 comprises a pair of clamping means 22 and 23. The clamping means 22 and 23 are respectively disposed at the ends of the laminated leaf spring assembly 10. But only one clamping means 22 or 23 may be arranged at one end of the assembly 10. The clamping means 22 and 23 are of the same structure and serve to clamp the leaf springs 12, 13 and 14 in the direction of their thickness and to permit the sliding movement of the leaf springs relative to each other.

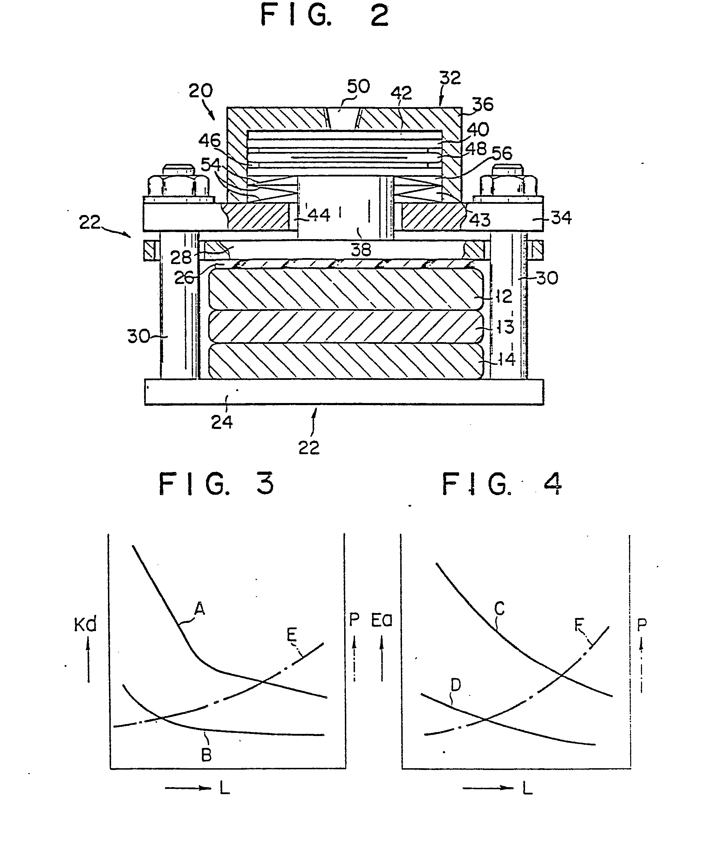

The construction of the clamping means 22 will be described below. Referring now to Fig. 2, the clamping means 22 comprises a spring supporting member 24 which can abut against the lower surface of the leaf spring 14, and a pressure member 28 for pressing against the upper surface of the leaf spring 12 through an intermediate member 26. The pressure member 28 and the spring supporting member 24 hold and clamp the leaf springs 12, 13 and 14 therebetween. The intermediate member 26 is made of, for example an elastic material such as hard rubber so as to permit the sliding movement of the leaf spring 12 relative to the pressure member 28. A plurality of, for example 4, bolts 30 (only two bolts are shown in Fig. 2) are uprightly erected on the spring supporting member 24. The pressure member 28 is vertically movably supported by the bolts 30.

A hydraulic cylinder means 32 is mounted on the clamping means 22. More particularly, the hydraulic cylinder means 32 comprises a cylinder 36 having at its open end an integrally formed outer flange 34. The outer flange 34 is securely fixed to the free ends of the bolts 30 by nuts. A piston 38 is vertically movably arranged in the cylinder 36. A piston head 40 integrally formed at one end of the piston 38 divides the interior of the cylinder 36 into a head chamber 42 and a rod chamber 43. The outer or free end of the piston 38 extends outward through a central hole 44 of the flange 34 to be fixed to the pressure member 28. The piston head 40 has an annular groove 46 in which an O-ring 48 is disposed. A port 50 is formed in the base wall of the cylinder 36. A pressurized fluid such as pressurized oil flows into or from the head chamber 42 through a duct 52 connected to the port 50 (see Fig. 1). A return spring 56 having a number of, for example 3 in this embodiment, initially coned disc springs 54 is arranged in the rod chamber 43. The initially coned disc springs 54 are of such a shape as to prevent the piston from tilting. In other words, each of the disc springs 54 has an outer diameter slightly smaller than the inner diameter of the cylinder 38 and also has a central hole of a diameter slightly larger than the outer diameter of the piston 38.

In the clamping means 22 and 23 of the construction described above, the piston 38 slides in the cylinder 36 to press the pressure member 28 downward, when the pressurized fluid is supplied into the head chamber 42 of the cylinder 36 through the port 50. Then, the pressure member 28 and the spring supporting member 24 hold and clamp the leaf springs 12, 13 and 14 therebetween through the intermediate member 26. The force exerted by the piston 38 can be controlled by controlling the pressure of the pressurized fluid acting on the piston head 40. By controlling the force of the piston 38, in turn, the friction between the leaf springs 12 and 13 as well as between leaf springs 13 and 14 can be controlled. When the pressurized fluid is drained, the biasing force of the return spring 56 causes the piston 38 to return to its retracted position, so that the pressurized fluid in the head chamber 42 flows out through the port 50. Since the return spring 56 has the initially coned disc springs 54, tilting movement of the piston 38 can be readily prevented. Large urging force can be readily produced by the highpressure fluid, so that a hydraulic cylinder means 32 of a compact structure may be used. Particularly, since the disc springs 54 provide a relatively large biasing force a return spring of relatively small height may be used. As a result, a shorter cylinder and therefore a hydraulic cylinder means 32 of a relatively compact construction can be used. In this manner, since the compact hydraulic cylinder means 32 is combined with each of the clamping means 22 and 23, a desired number of clamping means can be mounted in the desired longitudinal positions of the laminated leaf spring assembly 10 without obstructing the positioning of the vehicle body and the axle. Although vibration of relatively large magnitude is produced directly in the vehicle body or on the axle, the vibration of the laminated leaf spring assembly 10 for suspending these parts is relatively small. In addition, the clamping means 22 and 23 are arranged not between the vehicle body or the axle and the laminated leaf spring assembly 10 but mounted directly on the assembly 10. Therefore, the clamping means 22 and 23 need not have very good vibration-proof properties and can be of a simple and compact structure.

The apparatus 20 for controlling the friction between the leaf springs further comprises a hydraulic control means 58, as shown in Fig. 1. The hydraulic control means 58 includes a control valve 60 for controlling the pressure of the pressurized oil supplied into the head chamber 42. The control valve 60 is connected through a duct 64 to a fluid source 62 having a reservoir, a motor and a pump.

The control apparatus 20 further comprises a detector means 66 for detecting the predetermined factors of the vehicle movement to control the operating pressure of the control valve 60, as shown in Fig. 1. The detector means 66 includes first and second series-connected integrating circuits 68 and 69; a first control circuit 70, a second control circuit 72 connected to the input end of the second integrating circuit 69 and in parallel with the first control circuit 70; and a third control circuit 74 connected to the input end of the first integrating circuit 68 and in parallel with the first control circuit 70. Furthermore, fourth and fifth control circuits 76 and 78 are connected in parallel with the first, second and third control circuits 70, 72 and 74. The output ends of the first to fifth control circuits 70, 72, 74, 76 and 78 are connected to a synthesizing unit 80. The outputs from these control circuits are synthesized in a predetermined ratio. The output end of the synthesizing unit 80 is connected to the control valve 60 through an amplifier 82.

The control circuits 70, 72, 74 and 76 are respectively connected to sensors for sensing predetermined factors of the vehicle movement, for example, the vertical or horizontal acceleration, the speed, and the displacement of the vehicle body, as well as the steering angle of the steering wheel. The respective sensors are so constructed as to sense the corresponding factors such as the acceleration to produce predetermined signals, as is well known in the prior art. In this embodiment, a sensor 84 for sensing the vertical acceleration of the vehicle body is connected in parallel with the input end of the first integrating circuit 68. A sensor 86 for sensing the steering angle of the steering wheel and a sensor 88 for sensing the vehicle speed are connected in parallel with the input end of the fourth control circuit 76. A manual control unit 90 is connected to the input end of the fifth control circuit 78.

In the above construction, the output signals from the first to fourth control circuits 70, 72, 74 and 76 are cut off and the manual control unit 90 is appropriately set to keep the output of the amplifier 82 constant. Then, the pressure of the pressurized fluid supplied to the hydraulic cylinder means 32 through the control valve 60 is maintained constant. As a result, the friction between the leaf springs is also kept constant and the control apparatus 20 acts in the same manner as the conventional clamping means. Fig. 3 shows the vibration amplitude L at the end of the laminated leaf spring assembly 10 as a function of a dynamic spring constant Kd. In Fig. 3, the characteristic curve indicated by solid line A is obtained when the pressure of the pressurized fluid is at a constant high level, and that indicated by solid line B is obtained when it is at a constant low level. Fig. 4 shows an equivalent damping coefficient Ea calculated from the friction between the leaf springs as a function of the vibration amplitude L. The characteristic curve indicated by solid line C is obtained when the pressure of the pressurized fluid is at a constant high level and that indicated by solid line D is obtained when it is at a constant low level.

The output signals from the first, second and third control circuits 70, 72 and 74 control the control valve 60 so that the pressure P of the pressurized fluid increases with the vibration amplitude L as shown by one-dot chain lines E and F of Figs. 3 and 4, respectively. Then, when the variation amplitude L is small, for example on the smooth road, the pressure P of the pressurized fluid is decreased and the friction between the leaf springs is also reduced to improve the comfort. On the other hand, when the vibration amplitude L is large, for example on the rough road, the pressure P and the equivalent damping coefficient Ea are both increased to increase the friction between the leaf springs and to improve the comfort. Thus, good comfort is constantly maintained regardless of the condition of the road surface. Furthermore, a control signal corresponding to the centripetal acceleration of the vehicle body is issued from the fourth control circuit 76 in accordance with the output signals from the sensor 86 for detecting the steering angle of the steering wheel and from the sensor 88 for detecting the vehicle speed. The pressure P of the pressurized fluid increases with the centrepetal acceleration so that the excellent comfort is maintained. In addition, the tilting of the body caused by the centripetal acceleration can be suppressed to greatly improve the driving stability of the vehicle during the turning movement. Means for detecting the displacement, the speed and the acceleration of one of the leaf springs 12, 13 and 14 of the laminated leaf spring assembly 10 on both sides of the body, may be provided in place of or together with the sensors 86 and 88. Alternatively, reference signal generators may be provided in all or some of the control circuits 70, 72, 74, 76 and 78, so that desired control may be performed.

Desired control may be performed through the manual control unit 90 instead of automatic control circuit. Alternatively, manual control may be performed to respond to the need of the driver or the load conditions or to correct automatic control.

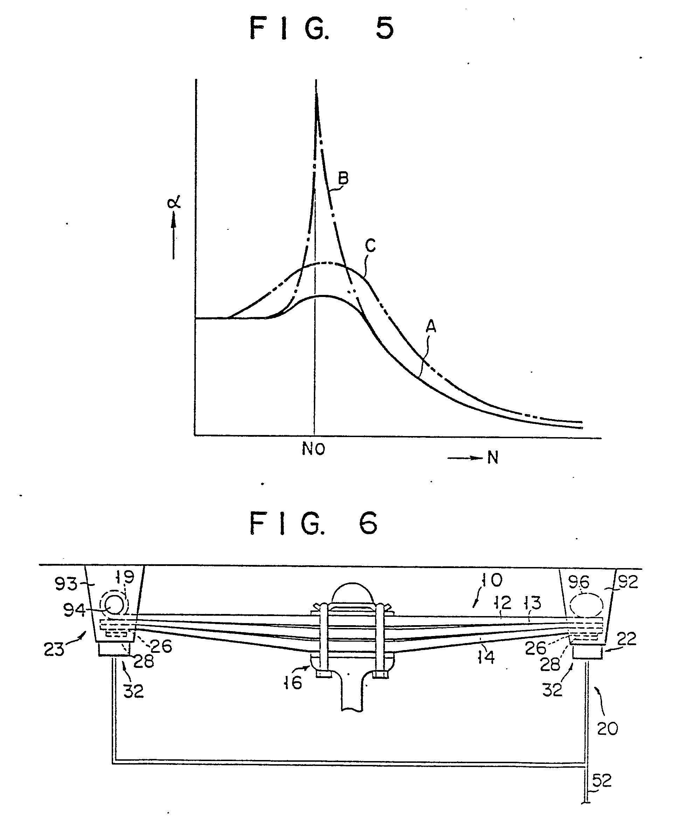

The control apparatus 20 can be also used for preventing the vibration of a rotating machine and the like. In this case, when the sensor 84, for example, senses that the vibration frequency N of the rotating machine is near the resonance point No as shown in Fig. 5, it serves to increase the operating pressure of the control valve 60 and to increase the pressure of the pressurized fluid. Consequently, an excellent vibration-proof characteristic is obtained, the vibration transmissibility of which is as indicated by solid line A of Fig. 5. The vibration-proof characteristic as indicated by one-dot chain line B is obtained when the friction between the leaf springs is maintained constant as in the case of the prior art laminated spring assembly, and that as indicated by two-dot chain line C is obtained when the laminated leaf spring assembly is combined with a shock absorber.

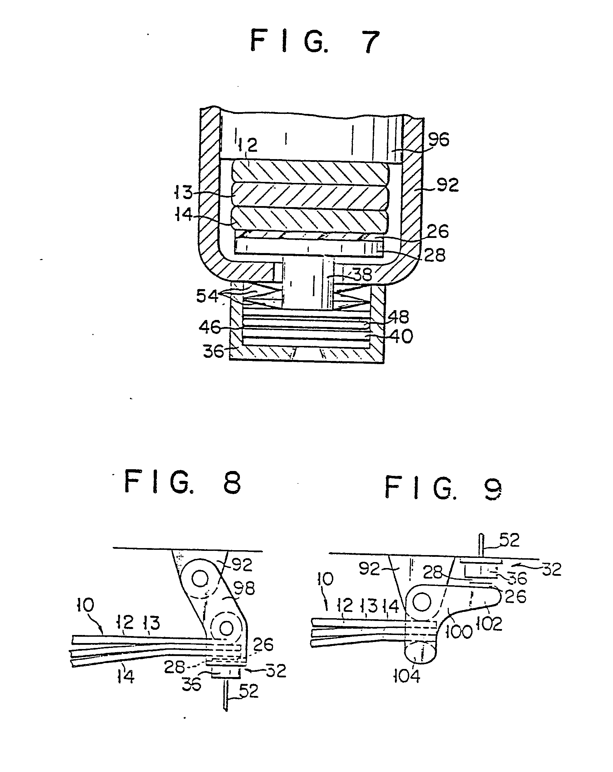

Figs. 6 and 7 show a second embodiment of the present invention wherein the piston is urged against the lowermost leaf spring 14 through the intermediate member 26. In this embodiment, the same reference numerals designate the same parts as those in the first embodiment shown in Figs. 1 and 2. A laminated leaf spring assembly 10 is mounted to the vehicle body by brackets 92 and 93. A main leaf spring 12 has at its left end a spring eye formed integrally therewith. The spring eye 19 is pivotally supported on the bracket 93 by a pin 94. A guide member 96 which abuts against the upper surface of the leaf spring 12 to allow the sliding movement of the right end of the leaf spring 12 is mounted to the bracket 92. Two pressure members 28 are provided each of which clamp the leaf springs 12, 13 and 14 between itself, and the pin 94 and the guide member 96 through the intermediate member 26, respectively. The basic construction and the mode of operation of clamping means 22 and 23 are the same as in the first embodiment and therefore a detail description thereof is omitted here. The control apparatus of the second embodiment has the same advantages as in the first embodiment. In addition, since a cylinder 36 of a hydraulic cylinder means 32 and a duct 52 extend in the direction to be apart from the vehicle body, a sufficient distance is advantageously ensured between them and the vehicle body.

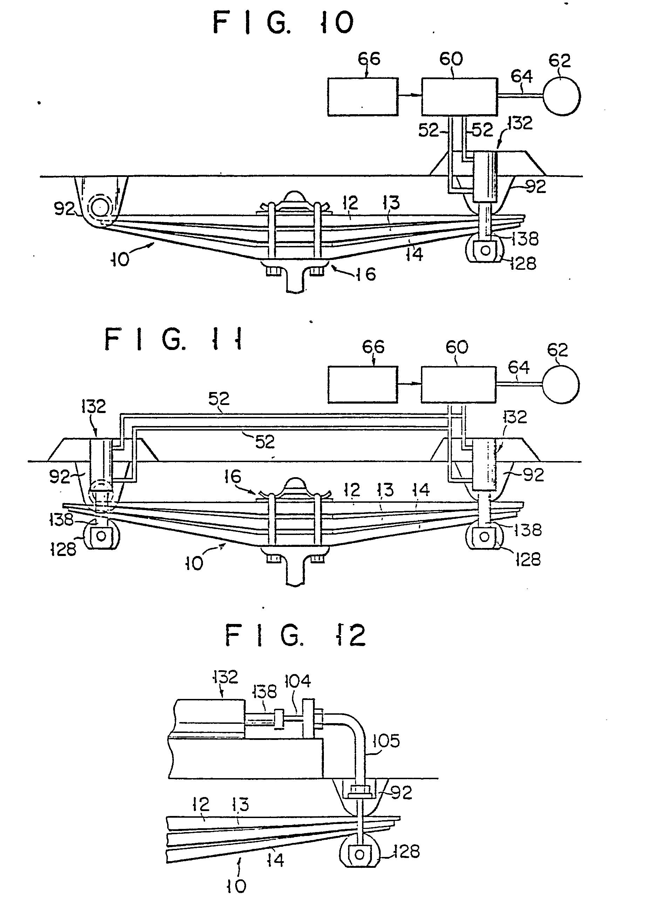

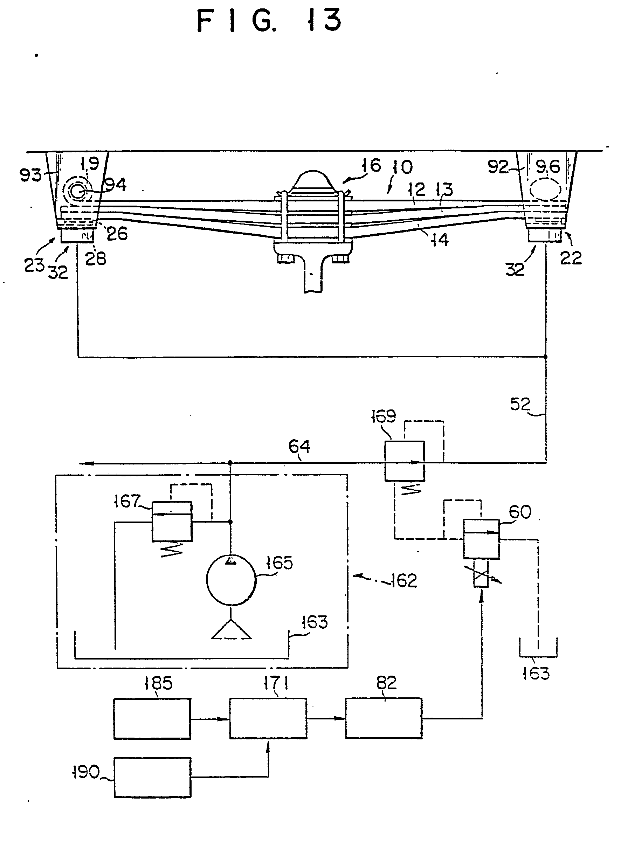

It is readily understood that the control apparatus according to the present invention is not limited to the first and second embodiments. For example, the hydraulic cylinder means 32 may be connected to the bracket 92 through a shackle assembly 98, as shown in Fig. 8. Alternatively, an L-shaped crank 100 may be pivotally mounted to the bracket 92 as shown in Fig. 9. In this case, one end 102 of the crank 100 is connected to the pressure member 28 of the clamping means through the intermediate member 26. The ends of the leaf springs 12, 13 and 14 are clamped between the other end 104 of the crank 100 and the lower end of the bracket 92. In the construction including the crank 100, the dynamic spring constant Kd and the equivalent damping coefficient Ea can be simultaneously controlled by controlling the pressure of the pressurized fluid. The lower end of the bracket 92 functions as a spring supporting member. The number of leaf springs is not limited and, a single leaf spring may be used. As shown in Fig. 10, a double-acting hydraulic cylinder means 132 which does not require a return spring may be used. Also, a piston 138 of the hydraulic piston means 132 may extend downward and a pressure member 128 may be provided at the lower end of the piston 138. In this case, the hydraulic cylinder means 132 and the pressure member 128 may be arranged at each end of the laminated spring assembly 10 as shown in Fig. 11, or the piston 138 of the hydraulic cylinder means 132 may be connected to the pressure member 128 through a push rod 104 as shown in Fig. 12. The push rod 104 is guided by a guide tube 105.

The control apparatus may adopt a fluid source of another type instead of the independent fluid source. In the eighth embodiment shown in Fig. 13, the control apparatus uses a fluid source 162 for power steering. The fluid source 162 has a reservoir 163, a pump 165 and a relief valve 167. An electromagnetic control valve 60 is connected to the fluid source 162 through a flow control valve 169. The laminated leaf spring assembly 10, the clamping means 22 and 23 as well as the hydraulic cylinder means 32 of the control apparatus are of the same structure as those of the second embodiment shown in Fig. 6 and therefore will not be described herein detail. Reference numeral 190 denotes a manual control unit; 185, an automatic sensor for automatically sensing the value of a factor such as the acceleration of a vehicle; and 171, a control circuit for controlling signals from the manual control unit 190 and the automatic sensor 185.

In the control apparatus of such a construction, for example, the vertical acceleration of the vehicle is detected by the automatic sensor 185 as in the previous embodiments. The detection signal is supplied to the control circuit 171 and a corresponding signal from the control circuit 171 is then supplied to the electromagnetic control valve 60 to determine the pilot pressure of the flow control valve 169. When the pilot pressure is set to a high value, large friction between the leaf springs is obtained. When the pilot pressure is set to a small value, small friction is obtained.

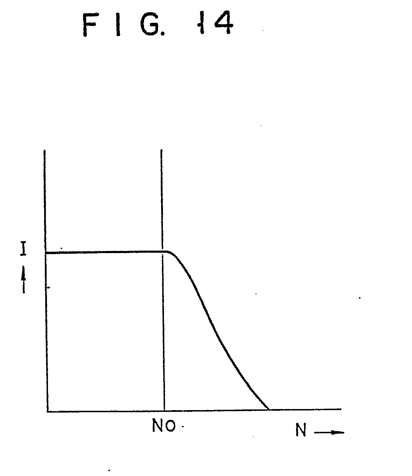

In this manner, the fluid source 162 for power steering can also be used for controlling the friction between the leaf springs and the fluid source for only friction control as described above can be omitted. Therefore, the control apparatus can be simple in construction and compact in size. The electromagnetic control valve 60 is used to control the pressure of a pressurized fluid through the pressure reducing valve 169. Therefore, an input current I supplied to the electromagnetic control valve 60 is controlled as shown in Fig. 14 in accordance with the detected factor, for example, the vibration frequency N of the vehicle. At low vibration frequencies below a resonance frequency No, the value of the input current I can be increased to increase the pressure of the pressurized fluid. In this case, the peak value of the vibration transmissibility a can be lowered as indicated by solid line A of Fig. 5. At high vibration frequencies above the resonance frequency No, the input current I is reduced to reduce the clamping force, so that the vibration transmissibility a can be reduced.

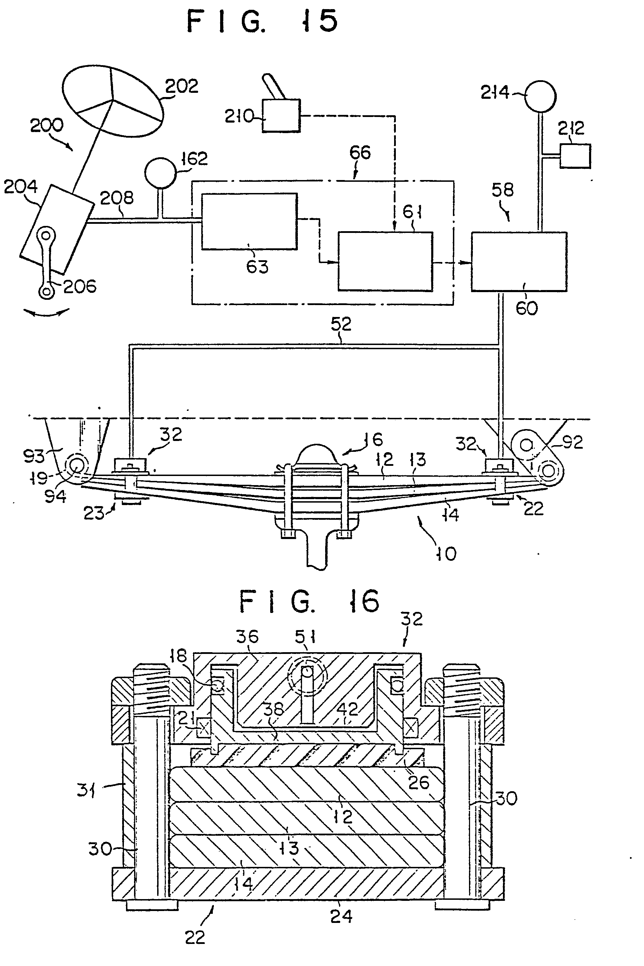

The control apparatus in accordance with the present invention which is installed in a vehicle having a power steering system can be constituted as shown in Figs. 15 and 16. Referring to Figs. 15 and 16, the right end of a laminated leaf spring assembly 10 is mounted on the bracket 92 through the shackle assembly 98. The left end of the laminated leaf spring assembly 10 is mounted on the bracket 93 by the pin 94. The brackets 92 and 93 are both mounted directly on a body to be supported, for example, the body of a vehicle. The hydraulic cylinder means 32 is mounted not on the body of the vehicle but directly on the laminated leaf spring assembly 10. A detector means 66 has a comparator 61 and a pressure sensor 63. The pressure sensor 63 serves to sense the pressure of pressurized oil for a power steering assembly 200.

In the power steering assembly 200, a drop arm 206 of a power steering unit 204 is pivoted in accordance with the steering angle of a steering wheel 202, as is well known in the art. Small steering power is increased by a hydraulic servo mechanism. When the vehicle runs straight, the pressurized oil from the fluid source 162 is drained. When the steering wheel 202 is operated to turn the vehicle, the oil pressure corresponding to the difference between the steering angle of the steering wheel 202 and that of the drop arm 204 is produced in a duct 208. In this manner, when the steering wheel 202 is rotated to change the heading direction of the vehicle body, the pressure of the pressurized oil in the duct 208 is increased. The increase in pressure is detected by the pressure sensor 63.

The comparator 61 serves to compare the pressure value issued from the pressure sensor 63 with a predetermined value. When the pressure value of the pressurized oil exceeds the predetermined value, the comparator 61 issues a clamp signal to the electromagnetic control valve 60. A clamp signal can be issued any time on the rough road by actuating a manual switch 210.

In this embodiment, the electromagnetic control valve 60 is connected to a fluid source 214 for a cab tilt device 212. The electromagnetic control valve 60 serves to permit and interrupt flow of the pressurized oil from the fluid source 214 to the duct 52. The cab tilt device 212 of a so-called cab- over-engine car is well known and operates to tilt a driver's cab frontward when the car is parked.

The clamping means 22 and the hydraulic cylinder means 32 of this embodiment as shown in Fig. 16 are different in structure from those shown in Figs. 2 and 7 in that they do not include means for forcibly returning the piston 38. In other words, the cylinder 36 is connected to the spring supporting member 24 through a spacer 31 by the bolts 30. The piston 38 in the cylinder 36 has no part corresponding to a rod. The intermediate member 26 is disposed between the free end of the piston 38 and the uppermost leaf spring 12. Reference numeral 21 denotes a dust seal. The pressurized oil from the control valve 60 flows through an oil passage 51 into a chamber 42 corresponding to the head chamber described above to urge the piston 38. As a result, the friction between the leaf springs 12 and 13 as well as the leaf springs 13 and 14 is increased. When the pressurized oil is drained, the force which clamps the leaf springs 12, 13 and 14 is released and the friction between the leaf springs is decreased. The clamping means 22 and the hydraulic cylinder means 32 cooperate to clamp the ends of the leaf springs 12, 13 and 14 or to release the clamping force.

In order to increase the friction between the leaf springs of the laminated leaf spring assembly 10 on the rough road, according to the control apparatus of the structure as described above, the manual switch 210 is operated to issue a clamp signal. Then, the pressurized oil from the fluid source 214 for the cab tilt device 212 flows through the electromagnetic control valve 60 into the duct 52 to press down the piston 38. The ends of the leaf springs 12, 13 and 14 are clamped against each other through the intermediate member 26 and the piston 38 acting as a pressure member, so that the friction between the leaf springs can be increased. Then, an equivalent damping coefficient is set to a high level to improve the damping characteristic as well as the comfort on the rough road.

On the smooth road, the manual switch 210 is operated in the opposite direction to disable the clamp signal from the comparator 61 and to operate the control valve 60. The pressurized oil from the fluid source 214 is interrupted to block the pressure of the pressurized oil in the duct 52. The force of the piston 38 clamping the leaf springs is released so that the friction between the leaf springs can be reduced. Therefore, the dynamic spring constant is decreased and the comfort on the smooth road is improved.

When the steering wheel 202 is operated on the smooth road to make a turn or to pull up, the power steering assembly 200 is driven to increase the pressure of the pressurized oil in the duct 208. The increase in pressure is detected by the pressure sensor 63. The detected value is compared with the predetermined value by the comparator 61. When the value of the oil pressure exceeds the predetermined value, that is, if the steering wheel 202 is rapidly rotated at a sharp turn, a clamp signal is issued from the comparator 61. The control valve 61 operates to press down the piston 38 as in the case on the rough road and to apply the clamping force to the leaf springs 12, 13 and 14. Therefore, the friction between the leaf springs is increased and the dynamic spring constant is set to a high value. The tilt of the body caused by the centrifugal force during a turn is suppressed and the driving stability can be greatly improved.

In this manner, good comfort is obtained both on the rough road and on the smooth road and excellent driving stability is ensured by the suspension system described above.

Use of a fluid source for a cab tilt device as a fluid source for driving the clamping means provides the following advantages. The clamping means 22 and 23 are operated only when the vehicle is running and the cab tilt device 212 is used only when it is parked. Therefore, the same fluid source 214 for cab tilt can be efficiently utilized both when the vehicle is parked and when it is running. In addition, no proper fluid source for the hydraulic cylinder means of the control apparatus is required so that the structure is simplified.

The fluid source for the cab tilt device need not be used as a fluid source for the hydraulic cylinder means and any suitable fluid source may be used to move the piston of the hydraulic cylinder means.

The magnitude of the clamping force may be continuously or stepwise varied in accordance with the level of the oil pressure in the power steering assembly 200. The clamping force may be regulated by manual control of the pressure of the pressurized oil by the control valve 60. The speed of the vehicle may be also detected in addition to the oil pressure for power steering. In this case, the pressure of the pressurized oil may be controlled in association with the vehicle speed.

As described above, in this embodiment, the increase in the power steering oil pressure at a turn is detected to control the friction between the leaf springs. The detecting system can be of an extremely simple structure as compared with that in which the speed of the vehicle and the steering angle of the steering wheel during operating are detected to control the friction between the leaf springs. Therefore, the detector means of the control apparatus can be simple in construction, improved in reliability, and inexpensive to manufacture. Since the friction between the leaf springs can be automatically increased in accordance with the steering angle of the steering wheel, excellent effects such as improvement in driving stability at a turn or during a pull up are provided.

## Claims

1. A method for controlling friction between a plurality of stacked leaf springs (12, 13, 14) of a laminated leaf spring assembly (10) for supporting the body of a vehicle, said leaf springs (12, 13, 14) being connected to one another by clamping means (22, 23) at least indirectly to form pairs of contacting friction surfaces between which load-dependent normal forces are generated during spring action, said friction control being executed by the force of a pressure member (28, 128) which is connected to a free end of a piston (40) of hydraulic cylinder means (32, 132) and which clamps said laminated leaf spring assembly (10) in co-operation with a spring supporting member (24) of said clamping means (22, 23) in the direction of thickness of said laminated leaf spring assembly (10), and said force of a pressure member (28, 128) being controlled by the pressure of a pressurized fluid supplied to a cylinder (36) of said hydraulic cylinder means (32, 132) through a control valve (60), characterized in that values of predetermined factors of the vehicle, including the acceleration and speed of the vehicle, the load put on the vehicle, the height of the body changed by the load and the rotation angle of the steering wheel, are detected and signals corresponding to the detected values are supplied to the control valve (60) to control the operation thereof.

2. A method according to claim 1, characterized in that no independent fluid source is provided and the pressurized fluid from a fluid source (214) already provided on the body to be supported is supplied to said cylinder (36) of said hydraulic cylinder means (32, 132).

3. A method according to claim 1 or 2, characterized in that the body to be supported is a vehicle incorporating a power steering assembly (200), the pressure of the pressurized oil acting on the power steering assembly (200) is detected, and the signal is supplied to said control valve (60) when the pressure exceeds a predetermined pressure.

4. An apparatus for controlling friction between a plurality of stacked leaf springs (12, 13, 14) of a laminated leaf spring assembly (10) for supporting the body of a vehicle, said leaf springs (12, 13, 14) being connected to one another by clamping means (22, 23) at least indirectly to form pairs of contacting friction surfaces between which load-dependent normal forces are generated during spring action, said friction control being executed by clamping means (22, 23) including a spring supporting member (24) and a pressure member (28, 128) which clamp said laminated leaf spring assembly (10) between said control apparatus comprising hydraulic cylinder means (32, 132) for pressing said pressure member (28, 128) to urge said laminated leaf spring assembly (10) against said spring supporting member (24), said hydraulic cylinder means (32, 132) including a cylinder (36) and a piston (38) which reciprocates in said cylinder (36) and a free end of which is connected to said pressure member (28, 128), and hydraulic controlling means (58) having a control valve (60) for controlling the pressure of a pressurized fluid supplied to a chamber (40) defined within said cylinder (36) of said hydraulic cylinder means (32, 132), characterized in that said apparatus comprises detecting means (66) for detecting values of predetermined factors of the vehicle, including the acceleration and speed of the vehicle, the load put on the vehicle, the height of the body changed by the load and the rotation angle of the steering wheel, and for supplying signals corresponding to the detected values to said control valve (60) so as to control the operating pressure of said control valve (60).

5. A control apparatus according to claim 4, characterized in that said piston (38) has an integrally formed head (40) for dividing an interior of said hydraulic cylinder (36) into a rod chamber (43) and a head chamber (42), the pressurized fluid is supplied to said head chamber (42), and a return spring (56) having a number of initially coned disc springs (54) is disposed in said rod chamber (43), said piston (38) extending through central holes of said initially coned disc springs (54).

6. A control apparatus according to claim 5, characterized in that each of the central holes of said return spring (56) has a diameter to define a guide for preventing said piston (38) from tilting.

7. A control apparatus according to claim 6, characterized in that said spring supporting member (24) of said clamping means (22, 23) includes part of a bracket (92) for mounting said laminated leaf spring assembly (10) on the body to be supported, and said pressure member (28, 128) of said clamping means (22, 23) transmits a force to said laminated leaf spring assembly (10) through an L-shaped crank (100) pivotally mounted on said bracket (92).

8. A control apparatus according to claim 4, characterized in that said pressure member (28, 128) of said clamping means (22, 23) includes the free end of said piston (38) of said hydraulic cylinder means (32, 132).

9. A control apparatus according to any one of preceding claims 4 to 8, characterized in that said control valve (60) of said hydraulic controlling means (58) includes an electromagnetic control valve, and said hydraulic controlling means (58) further includes a flow control valve (169) between said control valve (60) and said hydraulic cylinder means (32, 132).

10. A control apparatus according to claim 4 or 8, characterized in that the body to be supported is a vehicle incorporating a power steering assembly (200), and said detecting means (66) includes a pressure sensor (63) for sensing the pressure of the pressurized oil acting on said power steering assembly (100) and a comparator (61) for comparing a signal from said pressure sensor (63) with a predetermined value and for supplying a signal corresponding to the sensed pressure to said control valve (60) when the sensed pressure exceeds the predetermined value.

11. A control apparatus according to claim 10, characterized in that said detecting means (66) further includes manual switching means (210) for cutting off the signal from said pressure sensor (63) to said comparator (61) and for supplying the signal to said control valve (60).

12. A control apparatus according to claim 11, characterized in that a cab tilt device (212) is further incorporated in the vehicle, said hydraulic cylinder means (32, 132) does not have an independent fluid source, a fluid source (214) for said cab tilt device (212) is connected to said control valve (60), and the pressurized fluid from said fluid source (214) for said cab tilt device (212) is supplied to said hydraulic cylinder means (32, 132) through said control valve (60).

**Revendications**

1. Procédé de réglage du frottement entre plusieurs lames empilées (12, 13, 14) d'un ressort à lames (10) destiné à supporter la carrosserie d'un véhicule, les lames (12, 13, 14) étant raccordées les unes aux autres au moins indirectement par des dispositifs de serrage (22, 23) afin qu'elles forment des paires de surfaces de contact par frottement entre lesquelles des forces normales qui dépendent de la charge sont créées pendant le comportement élastique, le réglage du frottement étant réalisé par la force d'un organe de pression (28, 128) raccordé à une extrémité libre d'un piston (40) d'un vérin hydraulique (32, 132) et qui serre le ressort à lames (10) en coopération avec un organe de support (24) du dispositif de serrage (22, 23), dans la direction de l'épaisseur du ressort à lames (10), et la force de l'organe de pression (28, 128) est réglée par la pression du fluide sous pression transmis à un cylindre (36) du vérin hydraulique (32, 132) par l'intermédiaire d'une soupape de commande (60), caractérisé en ce que des valeurs de facteurs prédéterminés du véhicule, comprenant l'accélération et la vitesse du véhicule, la charge supportée par le véhicule, la variation de hauteur de la carrosserie due à la charge, et l'angle de rotation du volant, sont détectées et des signaux correspondant aux valeurs détectées sont transmis à la soupape de commande (60) afin que son fonctionnement soit commandé.

2. Procédé selon la revendication 1, caractérisé en ce qu'aucune réserve indépendante de fluide n'est incorporée, et le fluide sous pression d'une réserve (214) déjà présente sur la carrosserie à supporter, est transmis au cylindre (36) du vérin hydraulique (32, 132).

.3. Procédé selon l'une des revendications 1 et 2, caractérisé en ce que la carrosserie à supporter est un véhicule comportant un circuit (220) de direction assistée, la pression du liquide sous pression agissant dans le circuit (200) de direction assistée est détectée, et le signal est transmis à la soupape de commande (60) lorsque la pression dépasse une valeur prédéterminée.

4. Appareil de réglage du frottement entre plusieurs lames empilées (12, 13, 14) d'un ressort à lames (10) destiné à supporter la carrosserie d'un véhicule, les lames (12, 13, 14) étant raccordées au moins indirectement les unes aux autres par des dispositifs de serrage (22, 23) afin qu'elles forment des paires de surfaces de frottement en contact entre lesquelles des forces normales qui dépendent de la charge sont créées pendant le comportement élastique, le réglage du frottement étant assuré par incorporation, dans les dispositifs de serrage (22, 23), d'un organe (24) de support de ressort et d'un organe de pression (28, 128) qui serre le ressort (10) entre l'appareil de commande comprenant un vérin hydraulique (32, 132) destiné à repousser l'organe (28, 128) de pression afin que le ressort (10) soit repoussé contre l'organe de support (24), et cet organe de support, le vérin hydraulique (32, 132) comprenant un cylindre (36) et un piston (38) qui se déplace en translation dans le cylindre (36) et dont une extrémité libre est raccordée à l'organe de pression (28, 128), et un dispositif hydraulique de réglage (58) ayant une soupape (60) de commande destinée à régler la pression d'un fluide sous pression transmis à une chambre (40) délimitée dans le cylindre (36) du vérin hyraulique (32, 132), caractérisé en ce que ledit appareil comporte un dispositif (66) de détection de valeurs de facteurs prédéterminés du véhicule, comprenant l'accélération et la vitesse du véhicule, la charge supportéee par le véhicule, le changement de hauteur de la carrosserie sous l'action de la charge et l'angle de rotation du volant, et destiné à transmettre des signaux correspondant aux valeurs détectées à la soupape de commande (60) afin que la pression de fonctionnement de la soupape de commande (60) soit réglée.

5. Appareil de réglage selon la revendication 4, caractérisé en ce que le piston (38) a une tête solidaire (40) destinée à diviser l'intérieur du cylindre (36) en une chambre (43) de tige et une chambre (42) de tête, le fluide sous pression est transmis à la chambre de tête (42), et un ressort de rappel (56) ayant un certain nombre de disques initialement coniques (54) est disposé dans la chambre de tige (43), le piston (38) passant par des trous centraux des disques élastiques initialement coniques (54).

6. Appareil de réglage selon la revendication 5, caractérisé en ce que chacun des trous centraux du ressort de rappel (56) a un diamètre tel qu'il forme un guide destiné à empêcher le basculement du piston (38).

7. Appareil de réglage selon la revendication 6, caractérisé en ce que l'organe de support de ressort (24) des dispositifs de serrage (22, 23) comprend une partie d'un support (92) destiné à monter le ressort à lame (10) sur la carrosserie à supporter, et l'organe de pression (28, 128) des dispositifs de serrage (22, 23) transmet une force au ressort à lames (10) par l'intermédiaire d'un levier coudé en L (100) articulé sur le support (92).

8. Appareil de réglage selon la revendication 4, caractérisé en ce que l'organe de pression (28, 128) des dispositifs de serrage (22, 23) comprend l'extrémité libre du piston (32) du vérin hydraulique (32, 132).

9. Appareil de réglage selon l'une quelconque des revendications 4 à 8, caractérisé en ce que la soupape de commande (60) du dispositif hydraulique de commande (58) est une soupape électromagnétique, et le dispositif hydraulique (58) de commande comporte en outre une soupape (169) de réglage de débit montée entre la soupape de commande (60) et le vérin hydraulique (32, 132).

10. Appareil de réglage selon l'une des revendications 4 et 8, caractérisé en ce que la carrosserie à supporter est un véhicule qui comporte un circuit (200) de direction assistée, et le dispositif de détection (64) comporte un capteur (63) destiné à détecter la pression du liquide sous pression agissant sur le circuit (100) de direction assistée et un comparateur (61) destiné à comparer un signal provenant du capteur de pression (63) à une valeur prédéterminée et à transmettre un signal correspondant à la pression détectée à la soupape de commande (60) lorsque la pression détectée dépasse la valeur prédéterminée.

11. Appareil de réglage selon la revendication 10, caractérisé en ce que le dispositif de détection (66) comporte en outre un dispositif manuel (210) de commutation destiné à empêcher la transmission du signal du capteur de pression (63) au comparateur (61) et à transmettre le signal à la soupape de commande (60).

12. Appareil de réglage selon la revendication 11, caractérisé en ce que le véhicule comprend en outre un dispositif (212) de basculement de cabine, le vérin hydraulique (32, 132) n'a pas de réserve indépendante de fluide, une réserve de fluide (214) du dispositif de basculement de cabine (212) est raccordée à la soupape de commande (60), et le fluide sous pression de la réserve de fluide (214) du dispositif (212) de basculement de cabine est transmis au vérin hydraulique (32, 132) par l'intermédiaire de la soupape de commande (60).

**Patentansprüche**

1. Verfahren zur Steuerung der Reibung zwischen mehreren übereinander gestapelten Federblättern (12, 13, 14) einer lagenweisen Blattfeder-Anordnung (10) zum Tragen eines Fahrzeugkörpers, wobei die Federblätter (12, 13, 14) durch Klemmeinrichtungen (22, 23) zumindest indirekt derart miteinander verbunden sind, daß Paare von einander berührenden Reibflächen gebildet sind, zwischen denen während der Federung lastabhängige Normalkräfte hervorgerufen werden, wobei die Reibungssteuerung durch die Kraft eines Druckgliedes (28, 128) ausgeübt wird, welches mit einem freien Ende eines Kolbens (40) einer Hydraulikzylindereinrichtung (32, 132) verbunden ist und welches die lagenweise Blattfeder-Anordnung (10) im Zusammenwirken mit einem Federtragglied (24) der Klemmeinrichtungen (22, 23) in Richtung der Dicke der lagenweisen Blattfeder-Anordnung (10) zusammenklemmt, und wobei die Kraft eines Druckgliedes (28, 128) durch den Druck eines einem Zylinder (36) der Hydraulikzylindereinrichtung (32, 132) über ein Steuerventil (60) zugeführten Druckfluids gesteuert wird, dadurch gekennzeichnet, daß Werte von vorbestimmten Faktoren des Fahrzeugs einschließlich der Beschleunigung und der Geschwindigkeit des Fahrzeugs, der auf das Fahrzeug aufgebrachten Last, der durch die Last veränderten Höhe des Körpers und des Drehwinkels des Lenkrades, erfaßt werden, und daß den erfaßten Werten entsprechende Signale dem Steuerventil (60) zu dessen Steuerung zugeführt werden.

2. Verfahren nach Anspruch 1, dadurch gekennzeichnet, daß keine unabhängige Fluidquelle vorgesehen ist und daß das Druckfluid von einer an dem zu tragenden Körper bereits vorgesehenen Fluidquelle (214) an den Zylinder (36) der Hydraulikzylindereinrichtung (32, 132) abgegeben wird.

3. Verfahen nach Anspruch 1 oder 2, dadurch gekennzeichnet, daß der zu tragende Körper ein Fahrzeug mit einer Servolenkanordnung (200) ist, daß der Druck des auf die Servolenkanordnung (200) wirkenden Drucköls erfaßt wird und daß das Signal an das Steuerventil (60) abgegeben wird, wenn der Druck einen vorbestimmten Druck übersteigt.

4. Vorrichtung zur Steuerung der Reibung zwischen mehreren übereinander gestapelten Federblättern (12, 13, 14) einer lagenweisen Blattfeder-Anordnung (10) zum Tragen eines Fahrzeugkörpers, wobei die Federblätter (12, 13, 14) durch Klemmeinrichtungen (22, 23) zumindest indirekt derart miteinander verbunden sind, daß Paare von einander berührenden Reibflächen gebildet sind, zwischen denen während der Federung lastabhängige Normalkräfte hervorgerufen werden, wobei die Reibungssteuerung durch ein Federtragglied (24) und ein Druckglied (28, 128) aufweisende Klemmeinrichtungen (22, 23) ausgeübt ist, welche die lagenweise Blattfeder-Anordnung (10) zwischen der Steueranordnung derart festklemmen, die eine Hydraulikzylindereinrichtung (32, 132) aufweist, die das Druckglied (28, 128) so drückt, daß die lagenweise Blattfeder-Anordnung (10) gegen das Federtragglied (24) zwangsbewegt ist, wobei die Hydraulikzylindereinrichtung (32, 132) einen Zylinder (36) und einen Kolben (38) enthält, der in dem Zylinder (36) hin- und herbewegbar ist und dessen eines freies Ende mit dem Druckglied (28, 128) verbunden ist, und wobei die hydraulische Steuereinrichtung (58) ein Steuerventil (60) zur Steuerung des Drucks eines an eine Kammer (40) abgegebenen Druckfluids aufweist, die in dem Zylinder (36) der Hydraulikzylindereinrichtung (32, 132) definiert ist, dadurch gekennzeichnet, daß eine Detektoreinrichtung (66) vorgesehen ist zum Erfassen von Werten vorbestimmter Faktoren des Fahrzeugs, einschließlich der Beschleunigung und der Geschwindigkeit des Fahrzeugs, der auf das Fahrzeug aufgebrachten Last, der durch die Last veränderten Höhe des Körpers und des Drehwinkels des Lenkrades, und daß den erfaßten Werten entsprechende Signale dem Steuerventil (60) zur Steuerung des Arbeitsdrucks des Steuerventils (60) zugeführt sind.

5. Steuervorrichtung nach Anspruch 4, dadurch gekennzeichnet,

daß der Kolben (38) einen einteilig ausgebildeten Kopf (40) aufweist, der einen Innenraum des Hydraulikzylinders (36) in eine Stangenkammer (43) und in eine Kopfkammer (42) aufteilt,

daß das Druckfluid der Kopfkammer (42) zugeführt ist, und daß eine Rückstellfeder (56), die eine Anzahl von anfangs konischen Tellerfedern (54) aufweist, in der Stangenkammer (43) angeordnet ist,

wobei der Kolben (38) durch Mittellöcher der anfangs konischen Tellerfedern (54) ragt.

6. Steuervorrichtung nach Anspruch 5, dadurch gekennzeichnet, daß jedes Mittelloch der Rückstellfeder (56) einen Durchmesser aufweist, der eine Führung zur Vermeidung eines Verkantens des Kolbens (38) definiert.

7. Steuervorrichtung nach Anspruch 6, dadurch gekennzeichnet,

daß das Federtragglied (24) der Klemmeinrichtungen (22, 23) einen Teil eines Bügels (92) zur Anbringung der lagenweisen Blattfeder-Anordnung (10) an dem zu tragenden Körper enthält und

daß das Druckglied (28, 128) der Klemmeinrichtungen (22, 23) eine Kraft der lagenweisen Blattfeder-Anordnung (10) über eine an dem Bügel (92) schwenkbar angebrachte L-förmige Kurbel (100) überträgt.

8. Steuervorrichtung nach Anspruch 4, dadurch gekennzeichnet, daß das Druckglied (28, 128) der Klemmeinrichtungen (22, 23) das freie Ende des Kolbens (38) der Hydraulikzylindereinrichtung (32, 132) aufweist.

9. Steuervorrichtung nach einem der Ansprüche 4 bis 8, dadurch gekennzeichnet, daß das Steuerventil (60) der hydraulischen Steuereinrichtung (58) ein Elektromagnetsteuerventil aufweist und daß die hydraulische Steuereinrichtung (58) ferner ein Durchflußsteuerventil (169) zwischen dem Steuerventil (60) und der Hydraulikzylindereinrichtung (32, 132) aufweist.

10. Steuervorrichtung nach Anspruch 4 oder 8, dadurch gekennzeichnet,

daß der zu tragende Körper ein Fahrzeug mit einer Servolenkanordnung (200) ist und

daß die Detektoreinrichtung (66) einen Druckfühler (63) zum Erfassen des Drucks des auf die Servolenkanordnung (100) wirkenden Drucköls und einen Komparator (61) enthält, der ein Signal von dem Druckfühler (63) mit einem vorbestimmten Wert vergleicht und der ein dem erfaßten Druck entsprechendes Signal an das Steuerventil (60) abgibt, wenn der erfaßte Druck den vorbestimmten Wert überschreitet.

11. Steuervorrichtung nach Anspruch 10, dadurch gekennzeichnet, daß die Detekoreinrichtung (66) ferner eine Handschalteinrichtung (210) enthält, welche das Signal von dem Druckfühler (63) zu dem Komparator (61) abtrennt und das Signal an das Steuerventil (60) abgibt.

12. Steuervorrichtung nach Anspruch 11, dadurch gekennzeichnet,

daß in dem Fahrzeug ferner eine Führerhaus-Kippeinrichtung (212) enthalten ist,

daß die Hydraulikzylindereinrichtung (32, 132) ohne eine unabhängige Fluidquelle ist,

daß eine Fluidquelle (214) für die Führerhaus-Kippeinrichtung (212) mit dem Steuerventil (60) verbunden ist und

daß das Druckfluid von der Fluidquelle (214) für die Führerhaus-Kippeinrichtung (212) über das Steuerventil (60) an die Hydraulikzylindereinrichtung (32, 132) abgegeben wird.

FIG. 1

# F I G. 2

# F I G. 3

# F I G. 4

# F I G.  5

# F I G.  6

3

# F I G. 7

# F I G. 8

# F I G. 9

## F I G. 10

## F I G. 11

## F I G. 12

0 065 786

F I G. 13

6

# F I G. 14

# F I G. 15

# F I G. 16